(19) Europäisches Patentamt

European Patent Office

Office européen des brevets

(11) **EP 1 102 052 B1**

(12) **FASCICULE DE BREVET EUROPEEN**

(45) Date de publication et mention
de la délivrance du brevet:
**15.03.2006 Bulletin 2006/11**

(51) Int Cl.:
*G01M 19/00* (2006.01)     *G01M 15/00* (2006.01)
*G01L 5/22* (2006.01)     *F16K 1/22* (2006.01)
*G21D 1/02* (2006.01)     *F16K 37/00* (2006.01)
*F16K 31/04* (2006.01)

(21) Numéro de dépôt: 00403120.9

(22) Date de dépôt: **09.11.2000**

(54) **Procédé de contrôle de la marge d'opérabilité d'une vanne à papillon**

Verfahren zur Steuerung eines Klappenventils

Method to control a butterfly valve

(84) Etats contractants désignés:
**AT BE CH CY DE DK ES FI FR GB GR IE IT LI LU MC NL PT SE TR**

(30) Priorité: **16.11.1999 FR 9914371**

(43) Date de publication de la demande:
**23.05.2001 Bulletin 2001/21**

(73) Titulaire: **Framatome ANP**
**92400 Courbevoie (FR)**

(72) Inventeurs:
• **Martins, Georges**
**01120 Montluel (FR)**
• **Obon Soriano, José Manuel**
**50009 Zaragoza (ES)**
• **Menigoz, Sandrine**
**69006 Lyon (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
DE-A- 19 615 176     US-A- 4 735 101
US-A- 4 816 987     US-A- 5 475 299

**Description**

L'invention concerne un procédé de contrôle de la marge d'opérabilité d'une vanne à papillon et en particulier d'une vanne à papillon utilisée sur un circuit d'une centrale nucléaire.

Les vannes à papillon sont utilisées assez couramment pour commander le passage d'un fluide dans des tuyauteries de tout type constituant des parties de circuits de circulation de fluide tels qu'utilisés dans de nombreux secteurs de l'industrie.

Les vannes à papillon présentent l'avantage de permettre un passage intégral du fluide, avec une chute de pression très faible, lorsque le papillon, dans sa position totalement ouverte, est parallèle à la veine de fluide en circulation. Par rapport aux robinets ou vannes d'autres types, par exemple à soupape ou à coin, les vannes à papillon permettent généralement de réduire considérablement l'encombrement des moyens d'actionnement de la vanne. De ce fait, l'utilisation de vannes papillon peut être avantageuse dans de nombreux cas, du fait que leur faible encombrement, leur faible chute de pression à la traversée de la vanne ou leur sûreté de fonctionnement apportent des avantages que ne présentent pas les autres types de vanne. En particulier, les vannes à papillon sont largement utilisées sur des circuits ayant un rôle important pour la sûreté des centrales nucléaires tel que par exemple, dans le cas d'un réacteur nucléaire refroidi par de l'eau sous pression, le circuit de refroidissement du réacteur à l'arrêt, le circuit de contrôle volumétrique et chimique ou le circuit d'approvisionnement du réacteur en eau froide.

Les vannes à papillon et en particulier les vannes utilisées sur les circuits de sûreté des centrales nucléaires comportent des moyens de commande qui doivent présenter une grande sûreté de fonctionnement et qui sont conçus pour éviter d'endommager la vanne en cas de blocage. Il est nécessaire en effet d'éviter que des efforts excessifs s'appliquent aussi bien sur le papillon de la vanne que sur les différents éléments des moyens de commande et de déplacement du papillon disposés en série.

Ces éléments comportent généralement un moteur électrique, par exemple un moteur asynchrone à alimentation triphasée, un servomoteur auquel est associé un limiteur de couple permettant d'arrêter le moteur dans le cas de l'apparition d'un blocage et un réducteur, généralement non linéaire.

Les vannes disposées sur les circuits de sûreté des centrales nucléaires qui sont considérées comme importantes pour la sûreté de la centrale doivent faire l'objet d'une attention particulière, en ce qui concerne le contrôle de leurs caractéristiques de fonctionnement en service et l'entretien et la réparation des vannes pendant les périodes d'arrêt de la centrale nucléaire.

En outre, les vannes papillon sont présentes en grand nombre sur les circuits de centrales nucléaires comportant des réacteurs réalisés suivant les conceptions les plus récentes.

Il est donc nécessaire d'effectuer périodiquement des essais sur les vannes des circuits des centrales nucléaires pour déterminer l'opérabilité des vannes, c'est-à-dire la possibilité de les manoeuvrer dans leurs conditions habituelles de fonctionnement, sans risque d'arrêt intempestif des moyens de commande de ces vannes, en cours de manoeuvre, rendant impossible la réalisation complète de la manoeuvre.

Lorsque les essais doivent être réalisés sur des vannes disposées dans le bâtiment réacteur d'une centrale nucléaire, certains problèmes techniques se posent, tout d'abord du fait de la dosimétrie. Les appareils tels que les vannes, qui sont traversés et activés par un fluide radioactif, deviennent à leur tour des sources radioactives qui émettent des rayonnements et produisent une certaine contamination radioactive. La radioactivité est d'autant plus élevée qu'on s'approche des sources. De plus, les normes de sécurité imposent une durée limitée d'exposition du personnel aux rayonnements, selon l'intensité de ces rayonnements. Il est donc nécessaire de réaliser l'essai des vannes en un temps limité qui peut être très court lorsqu'elles constituent un point chaud du circuit de sûreté du réacteur nucléaire.

Un second problème est dû au fait qu'on ne peut intervenir à l'intérieur du bâtiment du réacteur que lors d'un arrêt de tranche, c'est-à-dire après arrêt des réactions neutroniques dans le coeur du réacteur nucléaire par retombée des barres de commande et refroidissement du circuit primaire du réacteur nucléaire. Les essais des vannes disposées dans le bâtiment réacteur doivent donc être planifiés pour être effectués pendant l'arrêt de tranche, ce qui restreint les possibilités d'intervention pour effectuer ces essais.

D'autre part, la démonstration de l'opérabilité des vannes demande l'analyse de caractéristiques de fonctionnement toujours plus précises et affinées pour répondre aux exigences des exploitants de centrales nucléaires, cette analyse devant être effectuée en outre dans les meilleurs délais.

Dans le cas des vannes utilisées dans les centrales nucléaires en particulier, il est souhaitable de disposer de procédés permettant d'effectuer des contrôles et diagnostics sur les vannes sans avoir à démonter les différentes parties de la vanne telles que le réducteur et le servomoteur.

Il est également souhaitable d'effectuer des contrôles dans des conditions les plus proches possibles des conditions d'utilisation des vannes sur les circuits de la centrale nucléaire.

On a donc proposé divers procédés permettant d'effectuer des contrôles et diagnostics sur des robinets ou vannes à papillon qui permettent de respecter plus ou moins les conditions requises. On trouve un exemple d'une telle procédé dans le document US5475299.

Dans le cas de centrales nucléaires britanniques, dont les circuits comportent des robinets à papillon équipés de servomoteurs à limiteur de couple, on a utilisé des procédés permettant un certain contrôle de l'opérabilité des robinets à papillon par des mesures électriques. Dans le cas de robinets à papillon sans arcade de guidage de la tige du robinet, on effectue une simple mesure d'intensité du courant sur une des phases du moteur électrique de commande et on repère le basculement des contacteurs électriques à la fermeture et à l'ouverture complète du robinet.

Cette méthode générale, qui peut être utilisée sur la plupart des robinets à papillon utilisés sur les circuits des centrales nucléaires, présente une faible précision du fait du caractère limité des mesures électriques effectuées.

Dans le cas de robinets à papillon comportant une arcade de guidage de la tige du robinet, ces robinets à papillon représentant une faible proportion de ceux qui sont utilisés sur les circuits des centrales nucléaires, on effectue le contrôle de l'opérabilité du robinet, également par des mesures d'intensité et par repérage du basculement des contacteurs et on mesure de plus directement sur la tige du robinet le couple exercé sur cette tige, à l'aide de jauges de contraintes collées sur la tige. Le dispositif de mesure de couple peut être laissé en permanence sur le robinet. Ce procédé présente l'avantage de permettre une lecture directe du couple exercé sur la tige, et donc d'obtenir le couple très rapidement, pendant l'essai. Cependant, ce procédé qui ne peut être appliqué qu'à une faible proportion de l'ensemble des robinets utilisés demande un démontage du robinet pour mettre en place les jauges de contrainte. Ce démontage est contraignant et peut être coûteux. En outre, les mesures d'intensité ne sont réalisées que sur une seule phase du moteur, ce qui réduit la précision du contrôle.

Dans le cas de centrales nucléaires installées aux Etats-Unis, on utilise des robinets à papillon équipés de servomoteurs à limiteur de couple comportant une vis sans fin en appui sur un empilement de rondelles Belleville, on a proposé d'effectuer le contrôle d'opérabilité des robinets par mesure d'intensité du courant électrique sur une phase du moteur électrique du robinet et par mesure des efforts exercés par la vis sur les rondelles Belleville et du déplacement de la vis sans fin. On calcule, à partir de ces mesures, en tenant compte du type de servomoteur utilisé, le couple du servomoteur.

Les moyens de mesure utilisés ne sont pas fixés de manière permanente sur le robinet. Dans le cas de l'utilisation de ce procédé, les avantages principaux sont de pouvoir réaliser une lecture directe du couple et de ne pas mettre en oeuvre des moyens de mesure tels que des jauges ou des capteurs fixés en permanence sur le robinet. Cependant, dans ce procédé de contrôle qui n'est utilisable que pour des servomoteurs d'un certain type, les jauges de contrainte utilisées doivent être adaptées à la forme de réalisation du servomoteur et le temps d'installation des moyens de mesure sur le robinet est relativement long, de l'ordre de 30 minutes. En outre, les mesures d'intensité sur une seule phase ne permettent pas d'obtenir une très bonne précision du contrôle d'opérabilité.

Les circuits de certaines centrales nucléaires utilisées en Espagne comportent des robinets à papillon équipés de servomoteurs d'au moins deux types différents et on a imaginé une méthode de contrôle d'opérabilité applicable à l'ensemble de ces robinets.

Pour effectuer le contrôle, le servomoteur, le réducteur et la vanne sont séparés les uns des autres et on effectue, dans un premier temps, le contrôle du servomoteur seul. Ensuite, on réaccouple le servomoteur au réducteur et on monte l'ensemble sur un banc qui comporte plusieurs plots calibrés faisant fonction de fusibles mécaniques qui sont placés successivement à différents angles de la course du papillon. L'essai consiste à vérifier qu'on n'atteint pas le couple de déclenchement du servomoteur, c'est-à-dire le couple entraînant l'arrêt du moteur par l'intermédiaire du limiteur de couple, pour un angle donné. Lorsqu'on parvient à cet angle de la course du papillon, c'est le fusible mécanique qui a été calibré en conséquence qui doit céder avant le déclenchement du servomoteur et l'arrêt du moteur électrique. On établit ainsi la marge d'opérabilité entre le couple résistant du papillon produit par le fusible mécanique et le couple de déclenchement du servomoteur.

Le robinet est ensuite équipé d'une jauge de mesure de couple, remonté et manoeuvré dans les conditions de débit et de pression du circuit sur lequel il est utilisé, pour mesurer les contraintes aux conditions nominales.

Enfin, on démonte le robinet pour retirer la jauge de couple puis on le remonte à nouveau pour sa mise en service sur le circuit.

Le système de contrôle n'est donc pas fixé en permanence sur le robinet.

Les inconvénients de ce système de contrôle sont que les données fournies par l'essai ne sont pas réutilisables et qu'il est nécessaire de recommencer l'essai pour chaque nouveau contrôle du robinet. L'essai demande l'intervention d'un grand nombre de personnes, pour effectuer le démontage du robinet, la mise en place du banc d'essai mécanique, le remontage du robinet avec la jauge de couple, l'essai consécutif, le démontage de la jauge de couple et enfin le remontage final du robinet. En conséquence, le coût du contrôle est important.

Enfin, l'opérabilité du robinet une fois remonté et remis en service n'est pas prouvée puisqu'on n'a pas effectué d'essai d'opérabilité du robinet en place sur la tuyauterie du circuit d'utilisation et dans des conditions normales de fonctionnement, après le dernier remontage.

Le but de l'invention est donc de proposer un procédé de contrôle de la marge d'opérabilité d'une vanne à papillon comportant un papillon monté rotatif autour d'un axe dans un corps de vanne et des moyens de commande pour le déplacement du papillon entre une position de fermeture et une position d'ouverture complète de la vanne, comportant un moteur électrique, un servomoteur et un réducteur disposés en série, pour assurer le déplacement en rotation du papillon, le servomoteur étant associé à un limiteur de couple réglable pour réaliser l'arrêt du moteur pour un couple de sortie fixé du servomoteur, appelé couple de déclenchement du limiteur de couple, le procédé de contrôle ayant pour but de vérifier que la marge entre un couple d'entraînement du papillon et un couple correspondant au déclenchement du limiteur de couple est au moins égale à une valeur prédéterminée pour toute position du papillon ou à tout instant pendant le fonctionnement de la vanne, le procédé permettant de déterminer la marge d'opérabilité de la vanne de manière précise, avec un démontage de la vanne limité à une phase initiale du procédé qui n'est effectuée qu'une fois, les contrôles ultérieurs de la vanne étant réalisés de manière non intrusive par des mesures électriques effectuées sur la motorisation de la vanne ou sur les moyens d'alimentation de la motorisation.

Dans ce but :

- dans une première phase initiale, on sépare le papillon des moyens de commande du déplacement, et on mesure, sur un banc de mesure, l'un au moins du couple de déclenchement du servomoteur et du couple de sortie du réducteur au déclenchement du servomoteur en une pluralité de positions angulaires de déplacement du papillon, les moyens de commande étant entraînés par le moteur électrique et, simultanément, la puissance active du moteur, pour une pluralité de valeurs de réglage du limiteur de couple et on en déduit des fonctions de transfert pour passer de la puissance active du moteur au couple d'entraînement du papillon, par l'un au moins du servomoteur et du réducteur,
- dans une seconde phase, on déplace le papillon de la vanne entre ses positions de fermeture et d'ouverture, par l'intermédiaire des moyens de commande entraînés par le moteur électrique, la vanne étant dans un état de fonctionnement et le limiteur de couple dans des conditions de réglage prédéterminées, on mesure la puissance active du moteur et on en déduit par le calcul, à partir des fonctions de transfert, des valeurs de l'un au moins du couple à la sortie du servomoteur et du couple à la sortie du réducteur au cours du déplacement du papillon, et
- on compare les valeurs du couple obtenues par la mesure et le calcul avec des valeurs correspondantes de l'un au moins du couple de déclenchement du servomoteur et du couple de sortie du réducteur au déclenchement du servomoteur obtenus dans la première phase, dans des conditions de réglage du limiteur de couple identiques aux conditions de réglage prédéterminées.

Afin de bien faire comprendre l'invention, on va maintenant décrire, à titre d'exemple, en se référant aux figures jointes en annexe, un mode de mise en oeuvre du procédé de contrôle de la marge d'opérabilité d'une vanne à papillon d'un circuit d'une centrale nucléaire.

La figure 1 est une vue en perspective de la vanne et de ses moyens de commande.

La figure 2 est une vue schématique montrant le moteur et le servomoteur de commande de la vanne.

La figure 3 est une vue en coupe du réducteur de commande de la vanne.

La figure 4 est une vue schématique montrant les moyens utilisés lors de la mise en oeuvre d'une première étape de la première phase du procédé de contrôle.

La figure 5 est une vue schématique montrant les moyens utilisés lors d'une seconde étape de la première phase du procédé de contrôle.

La figure 6 est une vue schématique montrant les moyens utilisés au cours de la seconde phase du procédé pour le contrôle de la vanne à papillon.

La figure 7 est un diagramme donnant le couple de sortie théorique et le couple de sortie réel mesuré du réducteur des moyens de commande de la vanne, en fonction de l'angle d'ouverture du papillon.

La figure 8 est un diagramme donnant, en fonction de l'angle d'ouverture du papillon de la vanne, le couple résistant du papillon provoquant le déclenchement du servomoteur et le couple réel mesuré pendant la manoeuvre de la vanne à papillon.

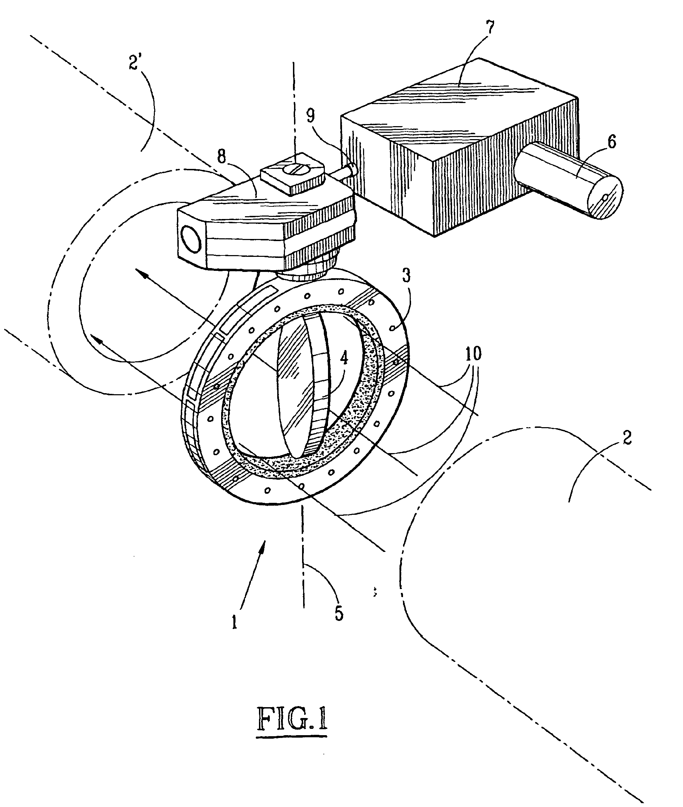

Sur la figure 1, on voit une vanne à papillon désignée de manière générale par le repère 1 qui est intercalée entre deux éléments de tuyauterie 2 et 2' d'un circuit de sûreté d'une centrale nucléaire comportant un réacteur à eau sous pression.

La vanne à papillon 1 comporte un corps de vanne 3 qui peut être constituée par un anneau raccordé ou fixé de manière étanche à l'intérieur de la tuyauterie 2, 2', dans lequel le papillon 4 de la vanne est monté rotatif autour d'un axe 5 de direction diamétrale par rapport au papillon qui présente la forme générale d'un disque et par rapport à l'anneau constituant une partie au moins du corps de vanne. Le corps de vanne peut être constitué uniquement par l'anneau 3 raccordé ou fixé de manière étanche à l'intérieur des canalisations 2, 2' ou encore par un élément de forme globale tubulaire dans lequel est monté l'anneau 3 et qui relié aux tuyauteries 2 et 2'.

Les moyens de commande de déplacement du papillon 4 de la vanne sont constitués par un moteur 6, un servomoteur 7 entraîné par l'arbre du moteur 6 et un réducteur 8 entraîné par une tige 9, à la sortie du servomoteur 7.

De cette manière le moteur 6, le servomoteur 7 et le réducteur 8 sont disposés en série et dans cet ordre pour assurer la commande de déplacement en rotation du papillon 4 de la vanne, entre une position de fermeture dans laquelle le disque constituant le papillon obture complètement l'ouverture interne de l'anneau 3 et une position d'ouverture complète dans laquelle le disque constituant le papillon 4 est disposé suivant un plan diamétral perpendiculaire au plan de l'ouverture de l'anneau 3, parallèlement au courant de fluide 10 circulant à l'intérieur des canalisations 2, 2' sur lesquelles est intercalée la vanne papillon 1.

De cette manière, dans la position d'ouverture, le papillon de la vanne, qui est parallèle au courant de circulation du fluide et qui présente une épaisseur faible, n'oppose qu'une très faible force de retenue à la circulation du fluide, de sorte que la perte de pression ΔP de part et d'autre de la vanne 1 est négligeable.

Le papillon 4 est solidaire d'un arbre dirigé suivant l'axe géométrique 5 de direction diamétrale qui est solidaire en rotation d'un élément de sortie du réducteur 8, comme il sera expliqué plus loin.

Le servomoteur 7 intercalé entre le moteur 6 et le réducteur 8 a pour rôle d'arrêter le moteur 6 par interruption de son alimentation, lorsque le couple résistant du papillon 4 entraîné en rotation dépasse une valeur prédéterminée.

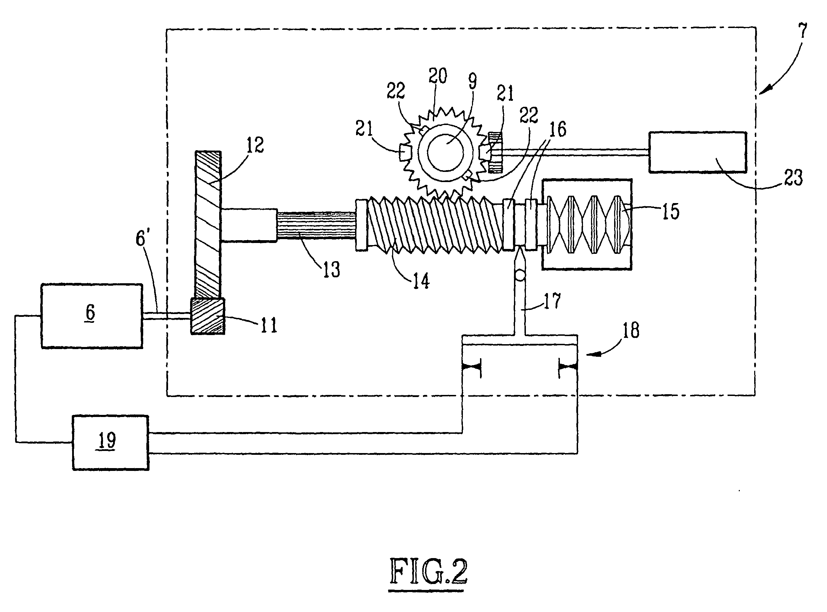

Sur la figure 2, on a représenté le moteur 6 qui est généralement un moteur asynchrone triphasé et le servomoteur 7 qui comporte un ensemble d'éléments représentés de manière schématique à l'intérieur du cadre 7 désignant le servomoteur.

L'arbre de sortie 6' du moteur triphasé 6 est solidaire d'un premier pignon 11, ou pignon primaire, du servomoteur 7 qui engrène avec un pignon secondaire 12 solidaire d'un arbre cannelé 13 engagé, pour son entraînement en rotation, dans une vis sans fin 14.

L'extrémité de la vis sans fin 14, opposée à l'extrémité dans laquelle pénètre l'arbre d'entraînement 13, vient en appui contre une première extrémité d'un empilement de rondelles Belleville 15 dont la seconde extrémité prend appui contre une partie fixe du servomoteur. De cette manière, l'empilement de rondelles Belleville 15 peut être comprimé par la vis 14, lors de l'avancée de la vis vers la droite sur la figure 2.

La vis sans fin 14 comporte deux parties annulaires en saillie 16 ménageant entre elles une gorge dans laquelle est engagée la partie d'extrémité d'un doigt 17 d'un limiteur de couple 18 réalisé sous la forme d'un contacteur électrique permettant de couper l'alimentation électrique 19 du moteur 6, lorsque la vis sans fin 14 en appui par sa partie d'extrémité sur l'empilement de rondelles Belleville 15 s'est déplacée vers la droite, sur une certaine distance en comprimant les rondelles Belleville 15. Le déplacement de la vis vers la droite avec compression des rondelles Belleville 1 5 se traduit par une augmentation du couple exercé sur la vis sans fin 14.

La vis sans fin 14 est placée de manière à assurer l'entraînement en rotation d'une roue dentée 20 dans une position tangentielle par rapport à la vis. La roue tangente 20 comporte des ergots d'entraînement 21 destinés à coopérer avec des ergots correspondants 22 d'une douille d'entraînement en rotation de la tige 9 de sortie du réducteur.

Des contacteurs électriques tels que 23 permettent de couper l'alimentation 19 du moteur 6 lorsque le papillon atteint sa position de fermeture ou sa position d'ouverture.

La position de fermeture, la position d'ouverture et les positions intermédiaires du papillon de la vanne seront caractérisées par l'angle α du papillon avec le plan médian de l'ouverture de la vanne. Dans la position de fermeture, l'angle α est nul et dans la position d'ouverture complète, l'angle α est sensiblement égal à 90°.

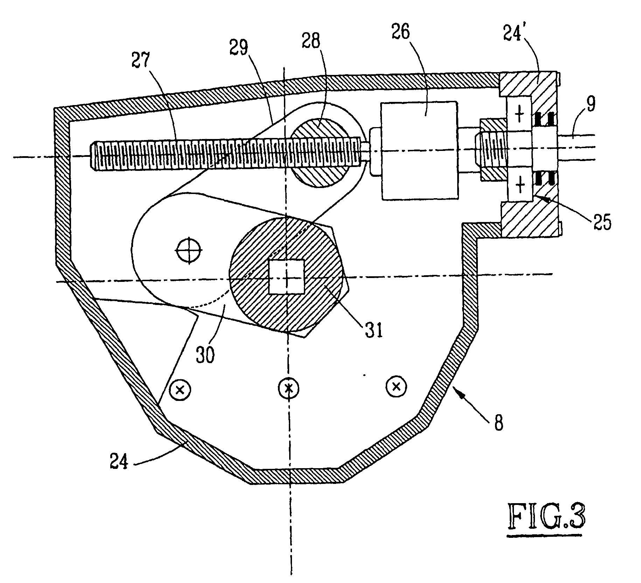

Sur la figure 3, on a représenté le réducteur 8 constituant le troisième élément des moyens de commande de la vanne placés en série.

Le réducteur 8 comporte un carter 24 monobloc réalisé par moulage qui comporte une ouverture d'entrée sur laquelle est rapporté un couvercle vissé 24'.

Le réducteur 8 est un réducteur à vis sans fin 27 et écrou 28 de type non linéaire, le couple de sortie du réducteur étant lié au couple d'entrée par un coefficient de proportionnalité qui est variable avec l'angle α d'ouverture du papillon de la vanne qui peut être mesuré sur le réducteur 8.

Le couvercle 24' du carter 24 du réducteur comporte des moyens pour assurer le passage de l'arbre de sortie 9 du servomoteur et son raccordement à la vis 27, par l'intermédiaire d'un accouplement à cardan 26.

L'écrou 28 engrenant avec la vis 27 est monté dans une partie d'extrémité d'une première bielle 29 dont la seconde extrémité est reliée de manière articulée à une seconde bielle 30 solidaire d'un mandrin 31 d'entraînement en rotation du papillon de la vanne. Le mandrin 31 comporte un carré d'entraînement dans lequel est engagée une tige solidaire du papillon 4 de la vanne constituant l'arbre du papillon 4 de la vanne.

La mise en rotation de la vis 27 produit un déplacement de l'écrou 28 le long de la vis 27 reliée au cardan 26. Le déplacement de l'écrou 28 le long de la vis 27 produit une rotation de la première bielle 29 qui commande elle-même la rotation de la seconde bielle 30, du mandrin 31 et de l'arbre du papillon de la vanne, soit dans le sens de l'ouverture soit dans le sens de la fermeture, entre la position de fermeture complète de la vanne, la première bielle 29 étant alors en butée contre le cardan 26 et la position d'ouverture complète de la vanne, la seconde bielle 30 étant alors en butée contre une partie du carter 24 du réducteur 8.

Comme indiqué plus haut, il est nécessaire d'effectuer périodiquement le contrôle d'opérabilité des vannes papillon utilisées sur les circuits de sûreté des centrales nucléaires.

Ce contrôle d'opérabilité vise à déterminer la marge entre le couple réel exercé sur le papillon de la vanne pour son entraînement, au cours d'un cycle, comportant une ouverture et une fermeture de la vanne et le couple de déclenchement du servomoteur ou le couple de sortie du réducteur correspondant au couple de déclenchement du servomoteur, ce couple étant égal au couple résistant du papillon entraînant le déclenchement du servomoteur et l'arrêt du moteur.

Pour assurer une bonne manoeuvrabilité ou opérabilité de la vanne à papillon, il est nécessaire de connaître la marge entre ces couples, pendant un cycle de manoeuvres complet du papillon. Cette vérification doit être effectuée à des intervalles réguliers, du fait que les différents éléments de la vanne à papillon et de ses moyens de commande peuvent avoir subi des détériorations ou modifications après un certain temps de fonctionnement.

Le fonctionnement du servomoteur sera expliqué en regard de la figure 2.

A l'instant initial, le papillon de la vanne est immobilisé dans une position qui peut être par exemple la position de fermeture de la vanne. L'extrémité de la vis sans fin 14 est en appui contre l'empilement de rondelles Belleville 15 qui a été comprimé lors de l'arrêt du papillon à la fin d'une manoeuvre précédente.

Le démarrage du moteur électrique 6 met en rotation, par l'intermédiaire du pignon primaire 11, le pignon secondaire 12 et l'arbre d'entraînement 13 du servomoteur. La vis sans fin 14 est mise en rotation, ce qui produit une décompression progressive de l'empilement de rondelles Belleville 15 par déplacement de la vis vers la gauche.

Lorsque les rondelles Belleville de l'empilement 15 sont décomprimées totalement, la vis 14 se trouve en relation d'engrènement avec la denture de la roue tangente 20 qui est entraînée en rotation dans le sens anti-horaire sur la figure 2.

Pendant une rotation de l'ordre de 160°, la roue tangente 20 tourne à vide jusqu'au moment où les plots d'entraînement 21 viennent en contact avec les plots 22 correspondants de la douille actionnant la tige 9 de sortie du servomoteur. Le moteur 6 et le servomoteur 7 en série assurent alors, par l'intermédiaire du réducteur 8, le pivotement du papillon de la vanne.

En cas de blocage du papillon, la roue tangente 20 se bloque en rotation, de sorte que la vis sans fin se déplace vers ta droite et comprime l'empilement de rondelles Belleville 15 ; le doigt 17 du limiteur de couple 18 se déplace vers la droite.

Suivant le réglage du limiteur de couple 18 par un index, le déclenchement du contacteur arrêtant le moteur se produit pour une compression plus ou moins forte de l'empilement de rondelles Belleville 15, c'est-à-dire pour un couple plus ou moins important exercé sur la vis 14 et l'ensemble d'entraînement du papillon.

Le but de l'invention est de déterminer la marge entre un couple d'entraînement du papillon et un couple résistant entraînant le déclenchement du limiteur de couple du servomoteur et l'arrêt du moteur.

Le procédé de l'invention permet de déterminer cette marge par des mesures électriques, sans démontage de la vanne et de ses moyens de commande et dans des conditions proches des conditions de fonctionnement normal, après avoir réalisé dans une première phase exécutée une fois pour toutes sur la vanne des mesures permettant d'établir une corrélation entre les caractéristiques électriques de fonctionnement du moteur et les couples mis en jeu à la sortie du servomoteur et à la sortie du réducteur.

Pour la mise en oeuvre de la première phase, ou phase initiale du procédé, la vanne à papillon 1 est séparée de ses moyens de commande 6, 7, 8. On réalise ensuite des mesures de couple et de puissance sur ces moyens de commande, après montage sur un banc de mesure de couple.

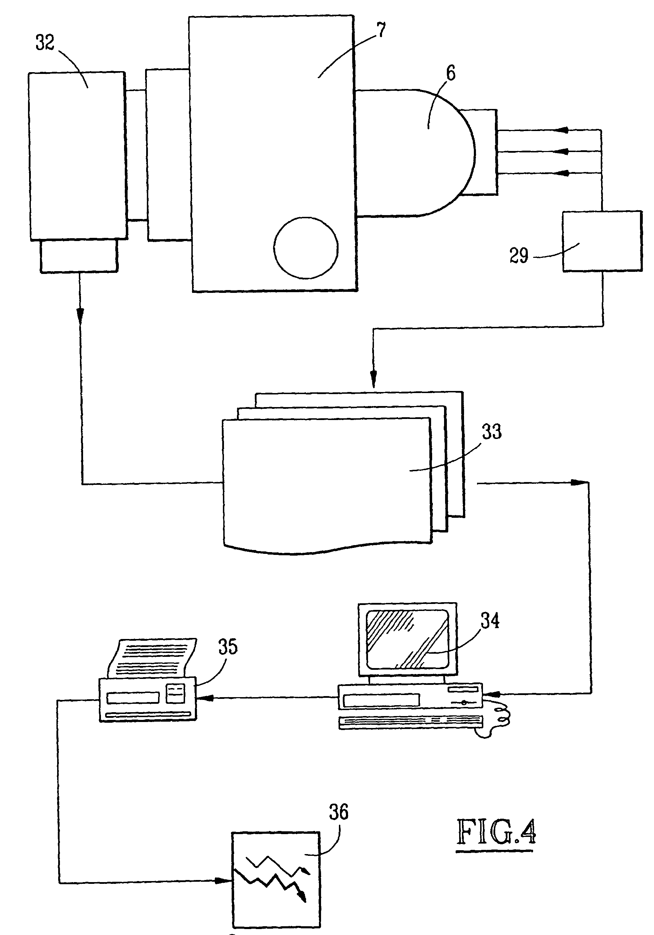

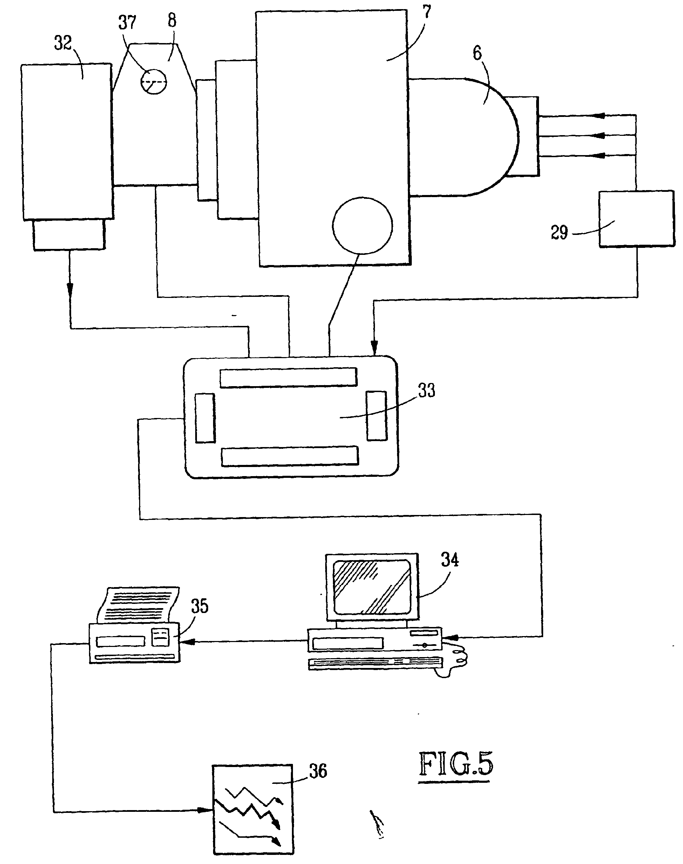

Sur la figure 4, on a représenté les moyens utilisés lors d'une première étape de mesure de la première phase du procédé sur le banc de mesure de couple et, sur la figure 5, on a représenté les moyens utilisés au cours d'une seconde étape de la première phase du procédé.

Pour la mise en oeuvre de la première étape de la phase initiale du procédé, on sépare le réducteur 8 du servomoteur 7 et on monte le moteur 6 accouplé au servomoteur 7 sur le banc de mesure qui comporte, en particulier, un frein 32 monté sur l'arbre de sortie du servomoteur 7, dont on peut faire varier le couple résistant pour réaliser les mesures de couple.

On utilise un système électronique d'acquisition de données 33 auquel sont reliés le dispositif d'alimentation électrique 29 du moteur 6 et le frein 32. Le système d'acquisition comporte des modules permettant de réaliser l'acquisition des courants électriques $i_1$, $i_2$, $i_3$ et des tensions $u_1$, $u_2$, $u_3$ sur les trois phases du moteur ainsi que les couples exercés par le frein 32 sur la sortie du servomoteur 7.

Le système électronique d'acquisition de données 33 est relié à un micro-ordinateur 34 de traitement des données, lui-même relié à une imprimante 35 ou un autre moyen d'édition de résultats numériques ou de courbes, tel que représenté en 36.

Le micro-ordinateur 34 permet de calculer à partir des courants $i_1$, $i_2$, $i_3$ et des tensions $u_1$, $u_2$, $u_3$ sur les trois phases du moteur 6, la puissance active du moteur 6 à un instant donné.

Les valeurs du couple exercé par le frein 32 sur l'arbre de sortie du servomoteur 7 peuvent être ainsi mises en parallèles avec les valeurs de la puissance active du moteur mesurée simultanément.

Le couple de sortie du servomoteur au moment du déclenchement du limiteur de couple 18 peut être réglé en déplaçant l'index de réglage de position du limiteur de couple 18, de manière à assurer une compression plus ou moins forte de l'empilement de rondelles Belleville 15, au moment du déclenchement du limiteur de couple et de l'arrêt du moteur. Cet index peut être placé dans différentes positions discrètes, par exemple quatre positions permettant d'obtenir un déclenchement du limiteur de couple pour quatre couples différents et croissants.

Une première opération effectuée lors de la première étape de la phase initiale du procédé consiste à vérifier le comportement linéaire du couple délivré par le servomoteur, au moment du déclenchement, en fonction des positions de réglage de l'index. Cette première opération permet de déterminer avec précision les valeurs du couple du servomoteur au déclenchement du limiteur de couple ($C_{LdC}$) pour chacune des positions de l'index.

Cette opération est nécessaire dans la mesure où les rondelles Belleville, qui ont en principe des propriétés élastiques se traduisant par un comportement linéaire, subissent en réalité un effort de compression permanent qui peut être associé à des variations de température de quelques degrés. Il en résulte un effet de fluage qui contrarie la linéarité du comportement des rondelles Belleville.

Cette première opération de vérification est effectuée sur le banc de mesure en utilisant les moyens représentés sur la figure 4.

Pour chacune des positions de l'index du limiteur de couple, on entraîne le moteur et on augmente le couple résistant du frein, jusqu'à obtenir le déclenchement du limiteur de couple du servomoteur 7. On mesure alors le couple correspondant à la position de l'index.

On vérifie la linéarité de la variation du couple en fonction de la position de l'index.

Une seconde opération effectuée lors de la première étape de la phase initiale du procédé consiste à vérifier le coefficient de réduction de la vitesse ou d'augmentation du couple entre la sortie du moteur 6 et la sortie du servomoteur 7. Cette vérification est effectuée sur le banc de mesure en utilisant les moyens représentés sur la figure 4.

Pour effectuer cette seconde opération de vérification, on mesure simultanément le couple résistant du frein 32 et les valeurs d'intensité et de tension sur les trois phases du moteur 6, en utilisant des pinces voltampèremétriques qui sont reliées au système d'acquisition 33.

Le calculateur 34 détermine, à partir des intensités et tensions la puissance active instantanée du moteur 6. Les valeurs instantanées du couple et de la puissance active du moteur permettent de déterminer le coefficient k de réduction de la vitesse entre la sortie du moteur et la sortie du servomoteur.

Les mesures de puissance et de couple sont réalisées pour différentes valeurs du couple de déclenchement à la sortie du servomoteur, ce qui permet d'obtenir des valeurs correspondantes de la puissance et du couple à la sortie du servomoteur.

On en déduit une fonction de transfert F entre la puissance et le couple à la sortie du servomoteur, au déclenchement du limiteur de couple.

Comme représenté, sur la figure 5, on réalise des mesures au cours d'une seconde étape de la phase initiale du procédé de contrôle, en montant sur le banc de mesure comportant le frein 32, le moteur 6 et le servomoteur 7 auxquels on a réaccouplé le réducteur 8. Le frein 32 est relié à la sortie du réducteur 8.

Comme précédemment, on mesure simultanément les courants et les tensions sur les phases du moteur 6 et le couple résistant du frein 32, ces valeurs étant recueillies par le système d'acquisition 33 relié au micro-ordinateur 34.

En utilisant les moyens représentés sur la figure 5, on détermine les pertes du réducteur suivant toute la course du papillon, en déterminant le couple théorique de sortie du réducteur à partir de la puissance active fournie par le moteur et le couple de sortie du réducteur au déclenchement du limiteur de couple mesuré sur le banc de mesure, à partir du frein 32.

Le couple de sortie théorique du réducteur est proportionnel à la puissance active du moteur, en tenant compte du facteur de proportionnalité k du servomoteur qui a été déterminé précédemment et des caractéristiques du réducteur non linéaire, le facteur de proportionnalité entre le couple à la sortie du réducteur et la puissance active du moteur étant une expression complexe dépendant de l'angle $\alpha$ caractérisant la position du papillon de la vanne.

Pour effectuer les mesures du couple de sortie du réducteur sur le banc de mesure, on règle l'index du limiteur de couple du servomoteur 7, de manière que le limiteur de couple se déclenche pour un angle $\alpha$ donné de rotation du papillon. On mesure alors le couple de sortie du réducteur 8 au déclenchement du limiteur de couple et on mesure de manière très précise en utilisant un mesureur d'angle 37 associé au réducteur, l'angle $\alpha$ du papillon, cette donnée étant transmise au système d'acquisition de données 33. On effectue simultanément les mesures d'intensité et de tension permettant de déterminer la puissance active $P_1$ du moteur 6.

On réitère cette opération afin de déclencher le limiteur de couple pour différents angle $\alpha$ suivant la course du papillon.

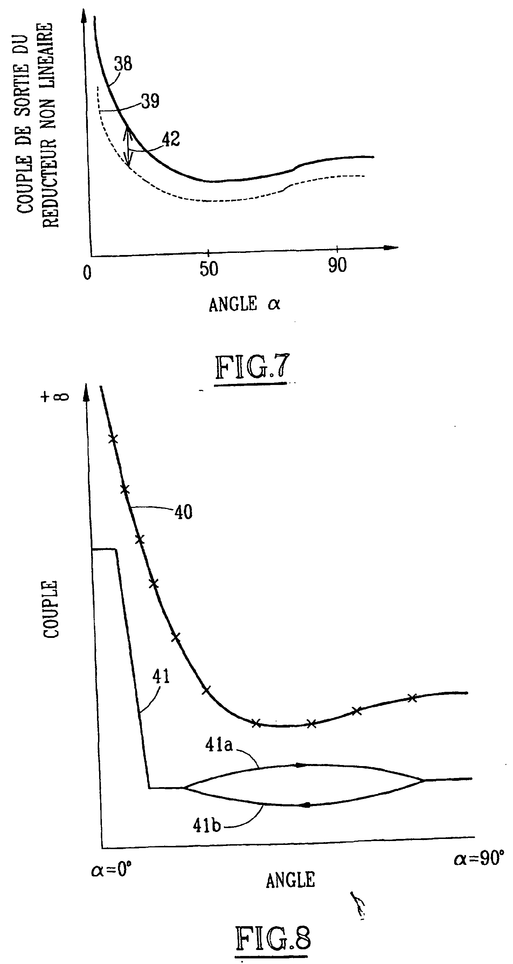

Les résultats se présentent sous la forme représentée sur la figure 7 où la courbe supérieure 38 en traits pleins représente le couple de sortie théorique déduit de la puissance active $P_1$ du moteur 6, en fonction de l'angle $\alpha$ et la courbe inférieure 39 en pointillés, le couple mesuré sur le banc de mesure représenté sur la figure 5.

Pour chacune des valeurs de l'angle $\alpha$, on peut en déduire les pertes du réducteur représentées par la flèche 42 sur la figure 7.

Les différentes mesures de puissance et de couple effectuées pour une pluralité de valeurs de l'angle $\alpha$ suivant la course du papillon et pour différents réglages du limiteur de couple permettent de déterminer une fonction de transfert F$\alpha$ entre la puissance $P_1$ du moteur et le couple à la sortie du réducteur, en fonction de l'angle $\alpha$ du papillon.

Il est également possible d'obtenir la fonction de transfert entre la puissance active du moteur et le couple à la sortie du réducteur en fonction du temps, l'angle $\alpha$ de déplacement du papillon étant lié au temps t par une relation établie à partir des caractéristiques du réducteur non linéaire.

A l'issue de la phase initiale du procédé, on garde en mémoire et on archive les différentes données qui ont été obtenues et calculées pendant les différentes opérations effectuées au cours des étapes de la phase initiale.

Ces données pourront être utilisées pour effectuer des contrôles et diagnostics sur la vanne à papillon, à un moment quelconque pendant la durée de vie de la vanne à papillon, même après une durée très longue, par exemple de l'ordre de plusieurs années après la réalisation de la phase initiale.

La seconde phase du procédé est mise en oeuvre directement sur la vanne papillon munie de ses moyens de commande en position de service sur le circuit d'utilisation.

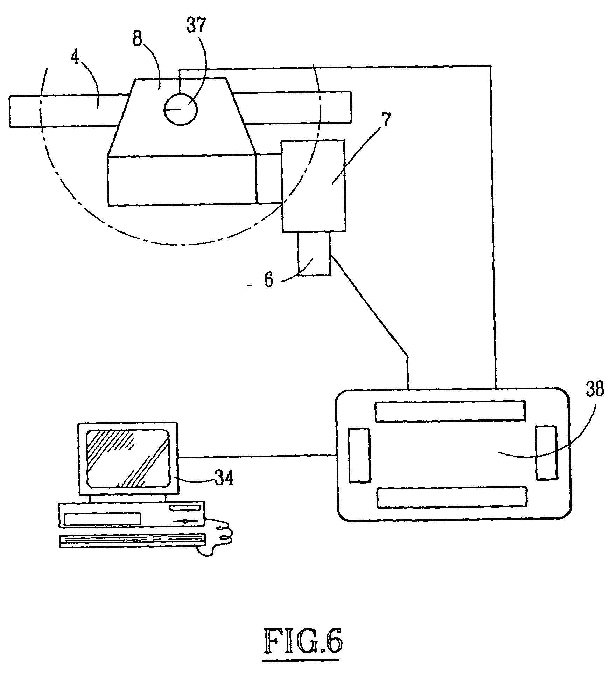

Sur la figure 6, on a représenté de manière schématique le papillon 4 de la vanne relié à la sortie du réducteur 8 placé en série à la sortie du servomoteur 7 accouplé au moteur 6. Le réducteur 8 est équipé d'un dispositif de mesure d'angle 37 qui est relié à un système 38 d'acquisition de données auquel sont également reliés des capteurs de mesure électrique sur les phases du moteur 6 qui peuvent être placés directement sur le moteur 6 ou au niveau de moyens d'alimentation du moteur électrique 6.

Le dispositif de mesure d'angle 37 fournit au système d'acquisition l'angle α définissant la position du papillon 4 pendant sa course et les intensités et tensions sur les trois phases du moteur triphasé 6.

Des signaux sont également transmis au système d'acquisition par les contacteurs de fin de course de la vanne à papillon 1.

Le système d'acquisition 38 est relié au micro-ordinateur 34 qui est utilisé pour exploiter les résultats de mesure parvenant au système d'acquisition.

On fait fonctionner la vanne à papillon, pendant au moins un cycle complet d'ouverture et de fermeture.

Pendant le cycle de fonctionnement de la vanne, on détermine par les mesures d'intensité et de tension et par le calcul la puissance instantanée Pi du moteur 6. On détermine les instants de basculement des contacteurs de fin de course pendant le cycle de fonctionnement de la vanne à papillon.

Une première vérification consiste à contrôler le niveau de la puissance active du moteur, au moment de l'ouverture du contacteur de fin de course dans la position de fermeture de la vanne. Cette puissance $P_1$ à l'ouverture du contacteur de fin de course doit toujours être inférieure à la puissance correspondante déterminée à la fermeture de la vanne pendant les essais sur banc de la phase initiale, ce qui indique un fonctionnement correct du contacteur de fin de course dont l'ouverture est obtenue avant le déclenchement du limiteur de couple.

En plus de ces vérifications préliminaires, on détermine, au cours d'une première étape de la seconde phase du procédé de contrôle, la marge d'opérabilité du servomoteur. La détermination et la vérification de l'existence de cette marge permet d'assurer le non déclenchement du limiteur de couple du servomoteur pendant le fonctionnement de la vanne à l'ouverture et à la fermeture.

Par définition, la marge d'opérabilité est définie par l'expression :

$$M = \frac{C_{LdC} - C_{max}}{C_{LdC}} \times 100$$

avec :

$C_{Ldc}$ valeur du couple de sortie du servomoteur au déclenchement du limiteur de couple,

$C_{max}$ : valeur maximale du couple délivré par le servomoteur pendant le fonctionnement de la vanne sur un cycle complet.

Pendant la première phase du procédé, on a déterminé une fois pour toutes les fonctions de transfert puissance-couple et en particulier la fonction de transfert F permettant de déterminer, à partir de la puissance active du moteur électrique, le couple à la sortie du servomoteur.

La marge M peut donc s'exprimer sous la forme :

$$M = \frac{F(P_{1LdC}) - F(P_{1max})}{F(P_{1LdC})}$$

La marge M est ainsi déterminée à partir de la mesure de puissance effectuée au cours de la seconde phase du procédé, en utilisant les moyens représentés sur la figure 6.

La mesure instantanée de la puissance $P_1$ du moteur au cours du cycle permet de déterminer la puissance maximale $P_{1max}$ ; en outre, le couple au déclenchement du limiteur de couple $C_{LdC} = F(P_{1LdC})$ a été obtenu et mis en mémoire lors de la première phase du procédé de contrôle. On peut donc calculer la marge M en tout point du cycle de fonctionnement de la vanne à papillon et en particulier lorsque la puissance et le couple sont à un maximum. En s'assurant de l'existence d'une marge suffisante au point correspondant à la puissance maximale, c'est-à-dire pour la valeur maximale du couple résistant du papillon, on s'assure du non déclenchement du limiteur de couple sur tout le cycle de fonctionnement du robinet à papillon.

Dans une dernière étape de la seconde phase du procédé, on détermine la marge d'opérabilité du réducteur et en particulier la marge d'opérabilité du réducteur au couple résistant maximal sur le papillon.

Pour cela, on trace la courbe limite supérieure théorique du couple à la sortie du réducteur, c'est-à-dire la courbe représentant le couple à la sortie du réducteur, lorsqu'on atteint la valeur du couple de déclenchement du limiteur de couple, en fonction de l'angle α caractéristique de la position du papillon de la vanne.

En pratique, lorsqu'on atteint cette valeur du couple, le limiteur de couple commande l'arrêt du servomoteur. La courbe limite supérieure du couple à la sortie du réducteur représente donc des valeurs maximales théoriques.

On peut démontrer que le couple à la sortie du réducteur non linéaire est une fonction du couple à l'entrée du réducteur, c'est-à-dire à la sortie du servomoteur qui peut s'exprimer en fonction de l'angle $\alpha$ traduisant la position du papillon de la vanne et des caractéristiques du réducteur non linéaire 8.

Le couple mécanique à la sortie du servomoteur est proportionnel à la puissance active $P_1$ du moteur, le facteur de proportionnalité qui dépend du coefficient de réduction entre le moteur et le servomoteur pouvant être calculé en fonction des résultats obtenus lors de la première phase du procédé.

On peut donc déterminer facilement par le calcul le couple théorique à la sortie du réducteur, à partir des valeurs de la puissance du moteur.

Sur la figure 8, on a représenté dans un diagramme couple en fonction de l'angle $\alpha$ définissant la position du papillon de la vanne, la courbe 40 représentative du couple maximal théorique défini par le calcul en fonction de l'angle $\alpha$, ce couple correspondant au couple résistant du papillon provoquant le déclenchement du limiteur de couple du servomoteur.

On a également représenté sous la forme d'une courbe 41, les variations du couple réel de sortie du réducteur correspondant au couple réel résistant mesuré pendant la course de la vanne.

Ce couple est obtenu par l'utilisation de la fonc-tion de transfert $F\alpha$ permettant de passer de la puissance active $P_1$ mesurée du moteur au couple à la sortie du réducteur.

On voit en particulier que la courbe 41 se dédouble pendant une partie du cycle d'ouverture et de fermeture de la vanne, la partie supérieure 41a de la courbe 41 correspondant à l'ouverture de la vanne et la partie inférieure 41 b, à la fermeture.

Le couple à la sortie du réducteur, qui est en fonction du couple à la sortie du servomoteur, est maximal lorsque le couple à la sortie du servomoteur est lui-même maximal.

On peut donc facilement déduire de la valeur du couple maximal à la sortie du servomoteur déterminée précédemment le couple maximal à la sortie du réducteur.

Cette valeur maximale est obtenue pour un an-gle $\alpha_m$ au cours du cycle de fonctionnement de la vanne. On détermine la marge d'opérabilité du réducteur non linéaire pour cet angle $\alpha_m$ et on compare la valeur obtenue à une valeur de seuil.

On peut ainsi vérifier la présence d'une marge d'opérabilité suffisante pendant toute la durée du cycle d'ouverture et de fermeture de la vanne et en particulier lorsque la valeur du couple de sortie du réducteur, c'est-à-dire la valeur du couple résistant du papillon, est maximale.

Les principaux avantages du procédé de l'invention sont les suivants :

- la seconde phase du procédé de contrôle d'opérabilité est effectuée aux conditions nominales de fonctionnement de la vanne papillon qui est en place sur son circuit d'utilisation. Cette dernière phase ne nécessite aucun démontage ultérieur de la vanne qui est donc contrôlée dans son état réel au cours de l'utilisation ;

- la seconde phase du procédé permettant de déterminer les marges d'opérabilité de la vanne peut être effectuée de manière répétitive sans démontage de la vanne, en utilisant les résultats des contrôles effectués précédemment et en particulier les résultats obtenus lors de la première phase du procédé mise en oeuvre une fois pour toutes sur un banc de mesure. La seconde phase peut être effectuée très longtemps, voire plusieurs années après la première phase, s'il n'y a pas eu de démontage de la vanne entre temps ;

- le procédé de contrôle de la vanne peut être mis en oeuvre pendant un arrêt de la tranche de la centrale nucléaire pour réaliser la première phase du procédé ou phase initiale et pendant l'utilisation normale de la vanne sur le circuit de la centrale nucléaire, pour la mise en oeuvre de la seconde phase du procédé, éventuellement de manière répétitive à certains intervalles de temps ;

- le procédé de contrôle suivant l'invention peut être utilisé avec tout type de servomoteur ;

- le procédé de contrôle est peu coûteux à mettre en oeuvre pour l'utilisateur de la vanne, puisqu'il ne nécessite qu'un seul démontage et que les essais effectués après réalisation de la phase initiale du procédé sont des essais qui peuvent être effectués très facilement, par de simples mesures électriques.

L'invention ne se limite pas strictement au mode de réalisation qui a été décrit.

C'est ainsi qu'on peut mettre en oeuvre la première phase du procédé sur tout banc de mesure permettant de déterminer un couple en sortie d'un moteur ou d'un motoréducteur.

Les résultats de mesure et de calcul peuvent être présentés non seulement en fonction de l'angle $\alpha$ définissant la position de la vanne mais également en fonction du temps, une relation pouvant être établie entre l'angle $\alpha$ définissant la position de la vanne et le temps au cours de la manoeuvre de la vanne. Suivant les exigences du contrôle, on peut réaliser les déterminations de couple à la sortie du servomoteur et à la sortie du réducteur ou encore à la sortie du servomoteur ou à la sortie du réducteur ainsi que la comparaison de ces couples à des couples théoriques pour déterminer les marges d'opérabilité, par tout moyen de calcul.

L'invention s'applique dans le cas de toute vanne ou robinet à papillon commandés à partir d'un servomoteur et d'un réducteur, quel que soit le type du servomoteur à limiteur de couple utilisé et le type de réducteur.

L'invention s'applique non seulement dans le domaine des centrales nucléaires mais également pour toute installation industrielle dans laquelle il est nécessaire de vérifier le bon fonctionnement de vannes et en particulier de vannes qui ne sont pas facilement accessibles.

**Revendications**

1. Procédé de contrôle de la marge d'opérabilité d'une vanne à papillon (1) comportant un papillon (4) monté rotatif autour d'un axe (5) dans un corps de vanne (3) et des moyens de commande (6, 7, 8) pour le déplacement du papillon (4) entre une position de fermeture et une position d'ouverture complète de la vanne, comportant un moteur électrique (6), un servomoteur (7) et un réducteur (8) disposés en série pour assurer le déplacement en rotation du papillon (4), le servomoteur (7) étant associé à un limiteur de couple (18) réglable pour réaliser l'arrêt du moteur (6) pour un couple de sortie fixé du servomoteur (7) appelé couple de déclenchement du limiteur de couple (18), le procédé de contrôle ayant pour but de vérifier que la marge entre un couple d'entraînement du papillon (4) et un couple de déclenchement du limiteur de couple (18) est au moins égale à une valeur de seuil prédéterminée pour toute position du papillon (4) ou à tout instant pendant le fonctionnement de la vanne, **caractérisé par le fait que** :

   - dans une première phase initiale, on sépare le papillon (4) des moyens de commande du déplacement (6, 7, 8) et on mesure sur un banc de mesure, l'un au moins du couple de déclenchement ($C_{LdC}$) du servomoteur (7) et du couple de sortie du réducteur (8) au déclenchement du servomoteur (7), en une pluralité de positions angulaires de déplacement du papillon (4), les moyens de commande (6, 7, 8) étant entraînés par le moteur électrique (6) et, simultanément, la puissance active du moteur (6), pour une pluralité de valeurs de réglage du limiteur de couple (18) et on en déduit des fonctions de transfert pour passer de la puissance active du moteur au couple d'entraînement du papillon (4) par l'un au moins du servomoteur (7) et du réducteur (8),
   - dans une seconde phase, on déplace le papillon (4) de la vanne (1) entre ses positions de fermeture et d'ouverture, par l'intermédiaire des moyens de commande (6, 7, 8) entraînés par le moteur électrique (6), la vanne étant dans un état de fonctionnement normal et le limiteur de couple dans des conditions de réglage déterminées, on mesure et on calcule la puissance active du moteur (6) et on en déduit par le calcul, à partir des fonctions de transfert, des valeurs de l'un au moins du couple à la sortie du servomoteur et du couple à la sortie du réducteur, au cours du déplacement du papillon (4), et
   - on compare les valeurs du couple obtenues par la mesure et le calcul avec des valeurs correspondantes à l'un au moins du couple de déclenchement du servomoteur (7) et du couple de sortie du réducteur (8), au déclenchement du servomoteur (7) obtenues dans la première phase.

2. Procédé suivant la revendication 1, **caractérisé par le fait que** le moteur (6) est un moteur triphasé et qu'on détermine la puissance active du moteur (6), à partir des intensités (i1, i2, i3) et des tensions (u1, u2, u3) sur les trois phases du moteur qui sont mesurées pendant le fonctionnement du moteur (6).

3. Procédé suivant l'une quelconque des revendications 1 et 2, **caractérisé par le fait qu'**on détermine de plus la fermeture et l'ouverture de la vanne à partir de signaux provenant de détecteurs de fin de course associés à la vanne papillon (1).

4. Procédé suivant l'une quelconque des revendications 1 à 3, **caractérisé par le fait que** dans la première phase du procédé, on détermine une fonction de transfert (F) permettant de passer de la puissance active ($P_1$) du moteur électrique (6) au couple à la sortie du servomoteur (7).

5. Procédé suivant l'une quelconque des revendications 1 à 4, **caractérisé par le fait qu'**on détermine, pendant la première phase du procédé, une fonction de transfert (Fα) permettant de passer de la puissance active ($P_1$) du moteur électrique (6) au couple à la sortie du réducteur qui est égal au couple résistant sur le papillon (4) de la vanne (1), pour une pluralité de positions du papillon (4) de la vanne (1) entre ses positions de fermeture et d'ouverture, chaque position de la pluralité de positions étant définie par un angle α représentatif de la position du papillon (4) de la vanne ou par un temps déterminé pendant le déplacement du papillon (4) de la vanne (1).

6. Procédé de contrôle suivant l'une quelconque des revendications 1 à 5, le servomoteur (7) comportant une vis sans fin (14) entraînée en rotation par le moteur électrique (6), par l'intermédiaire de pignons (11, 12) et d'un arbre d'entraînement (13), la vis sans fin étant en appui par son extrémité opposée à l'arbre d'entraînement (13) sur un empilement de rondelles Belleville (15) et une roue dentée (20) susceptible d'engréner avec la vis (14) et d'entraîner en rotation un arbre de sortie (9) du servomoteur, lorsque l'empilement de rondelles Belleville (15) n'est pas dans un état comprimé, le limiteur de couple (18) comportant un doigt d'actionnement (17) coopérant avec une partie (16) de la vis sans fin (14) pour déclencher un contacteur de coupure de l'alimentation du moteur électrique (6), pour un état de compression de l'empilement de rondelles Belleville (15) et un couple d'entraînement de la vis (14) réglés par un index, **caractérisé par le fait que**, dans une première étape de la première phase, on vérifie qu'il existe une relation linéaire entre la position de l'index de réglage du limiteur de couple (18) et le couple de sortie du servomoteur (7) au déclenchement du limiteur de couple (18), en mesurant le couple de sortie du servomoteur (7) sur le banc de mesure, par l'intermédiaire d'un frein (32) accouplé à l'arbre de sortie (9) du servomoteur (7), pour différentes positions de l'index du limiteur de couple (18).

7. Procédé suivant la revendication 6, **caractérisé par le fait que**, dans la première étape de la première phase du procédé, on détermine de plus le coefficient (k) de proportionnalité entre la vitesse de sortie du moteur (6) et la vitesse de sortie du servomoteur (7), en mesurant le couple de sortie du servomoteur (7) sur le banc de mesure et, simultanément, la puissance active ($P_1$) du moteur (6), par mesure des courants et tensions sur les phases du moteur (6).

8. Procédé suivant l'une quelconque des revendications 6 et 7, **caractérisé par le fait que**, dans une seconde étape de la première phase du procédé, on mesure le couple de sortie du réducteur accouplé au servomoteur (7) entraîné par le moteur électrique (6), sur le banc de mesure, en accouplant un frein (32) du banc de mesure à l'arbre de sortie du réducteur, qu'on mesure et qu'on calcule la puissance active du moteur (6) pour une pluralité de positions angulaires du réducteur (8) de déplacement du papillon (4) de la vanne (1), et qu'on détermine les pertes dues au réducteur (8) à partir d'une courbe donnant la valeur théorique du couple de sortie du réducteur obtenue à partir de la puissance active ($P_1$) du moteur (6) en fonction de la position du papillon (4) de la vanne (1) et d'une courbe représentative de la valeur réelle du couple mesurée par le banc de mesure sur l'arbre de sortie du réducteur.

9. Procédé suivant la revendication 8, **caractérisé par le fait que** le réducteur (8) est un réducteur non linéaire à vis et écrou.

10. Procédé suivant l'une quelconque des revendications 6 à 9, **caractérisé par le fait que**, dans une première étape de la seconde phase du procédé de contrôle, on détermine la marge d'opérabilité du servomoteur (7) de la vanne à papillon (1) en déterminant, sur la vanne à papillon dans des conditions d'utilisation réelles de la vanne, la puissance active ($P_1$) du moteur électrique (6) par mesure d'intensité et de tension sur les phases du moteur et par calcul, qu'on détermine le couple de sortie maximal ($C_{max}$) du servomoteur pendant un cycle de fonctionnement de la vanne à papillon (1) correspondant à la valeur maximale ($P_{1max}$) de la puissance active du moteur (6), par l'intermédiaire d'une fonction de transfert (F) déterminée dans la première phase du procédé, et qu'on calcule la marge

$$M = \frac{C_{LdC} - C_{max}}{C_{LdC}} \times 100$$

à partir du couple de déclenchement ($C_{Ldc}$) du servomoteur déterminé pendant la première phase du procédé et du couple maximal ($C_{max}$) déterminé par la mesure et le calcul de la puissance active du moteur (6).

11. Procédé suivant l'une quelconque des revendications 6 à 10, **caractérisé par le fait que**, dans une seconde étape de la seconde phase du procédé, on mesure et on calcule, pendant un cycle de fonctionnement de la vanne à papillon (1), la puissance active ($P_1$) du moteur électrique (6), qu'on calcule le couple de sortie du réducteur à partir de la puissance active ($P_1$) du moteur électrique (6) et en particulier le couple maximal ($C_m$) à la sortie du réducteur (8) correspondant au couple maximal ($C_{max}$) à la sortie du servomoteur déterminé précédemment et qu'on en déduit la marge d'opérabilité pour la position ($\alpha_m$) d'un papillon (4) de la vanne (1) donnant le couple maximal ($C_m$) à la sortie du réducteur, en mesurant l'écart du couple (Cm) à la sortie du réducteur par rapport à une courbe (40) donnant le couple de sortie du réducteur (8) correspondant au couple de déclenchement ($C_{Ldc}$) du servomoteur (7).

**Patentansprüche**

1. Kontrollverfahren des Betriebsfähigkeitsbereichs eines Klappenventils (1) mit einer drehbar um eine Achse (5) in ein Ventilgehäuse (3) montierten Klappe (4) und Steuerungseinrichtungen (6, 7, 8) für das Verstellen der Klappe (4) zwischen einer geschlossenen Position und einer vollständig geöffneten Position des Ventils, einen Elektromotor (6), einen Servomotor (7) und ein Reduziergetriebe (8) umfassend, in Reihe angeordnet, um die Rotationsverstellung der Klappe (4) zu tätigen, wobei der Servomotor (7) einen regelbaren bzw. einstellbaren Drehmomentbegrenzer (18) umfasst, um den Motor (6) bei einem festgelegten, Dremomentbegrenzer-Auslösungsmoment genannten Ausgangsmoment des Servomotors (7) zu stoppen, wobei das Kontrollverfahren den Zweck hat, zu verifizieren, dass der Bereich zwischen einem Antriebsmoment der Klappe (4) und einem Auslösungsmoment des Drehmomentbegrenzers (18) für jede Position der Klappe (4) oder zu jedem Zeitpunkt des Betriebs des Ventils wenigstens gleich einem vorher festgelegten Schwellenwert ist,
**dadurch gekennzeichnet, dass**

- man in einer ersten Anfangsphase die Klappe (4) von den Verstellungssteuerungseinrichtungen (6, 7, 8) trennt und man in einem Messstand wenigstens ein Moment, das Auslösungsmoment ($C_{Ldc}$) des Servomotors (7) und/oder das Ausgangsmoment des Reduziergetriebes (8) bei der Auslösung des Servomotors, in einer Vielzahl von Winkelverstellungspositionen der Klappe (4) misst, wobei die Steuerungseinrichtungen (6, 7, 8) durch den Elektromotor (6) angetrieben werden, und simultan die aktive Leistung des Motors (6) für eine Vielzahl von Steil- bzw. Regelwerten des Drehmomentbegrenzers (18) misst und man davon Transferfunktionen ableitet, um von der aktiven Leistung des Motors zu dem Antriebsmoment der Klappe (4) durch den Servomotor (7) und/oder das Reduziergetriebe (8) überzugehen,
- man in einer zweiten Phase die Klappe (4) des Ventils (1) zwischen ihren geschlossenen und geöffneten Positionen verstellt, mit Hilfe der Steuerungseinrichtungen (6, 7, 8), angetrieben durch den Elektromotor (6), wobei sich das Ventil in einem normalen Betriebszustand befindet und der Drehmomentbegrenzer festgelegten Regelungsbedingungen unterliegt, man die aktive Leistung des Motors (6) misst und berechnet und daraus durch Berechnung - aufgrund der Transferfunktionen - Werte wenigstens eines Moments, des Ausgangsmoments des Servomotors und/oder des Ausgangsmoments des Reduziergetriebes, im Laufe der Verstellung der Klappe (4) ableitet, und
- man die durch die Messung und die Berechnung erhaltenen Werte des Moments mit in der ersten Phase erhaltenen Werten vergleicht, die wenigstens einem Moment, dem Auslösungsmoment des Servomotors (7) und/oder dem Ausgangsmoment des Reduziergetriebes (8), bei der Auslösung des Servomotors (7) entsprechen.

2. Verfahren nach Anspruch 1, **dadurch gekennzeichnet, dass** der Motor (6) ein Drehstrommmotor ist und man die aktive Leistung des Motors (6) aufgrund der Stromstärken (i1, i2, i3) und der Spannungen (u1, u2, u3) auf den drei Phasen des Motors bestimmt, die während des Betriebs des Motors gemessen werden.

3. Verfahren nach einem der Ansprüche 1 und 2, **dadurch gekennzeichnet, dass** man zudem das Schließen und Öffnen des Ventils aufgrund von Signalen bestimmt, die von dem Klappenventil (1) zugeordneten Endbegrenzungsdetektoren stammen.

4. Verfahren nach einem der Ansprüche 1 bis 3, **dadurch gekennzeichnet, dass** man in der ersten Phase des Verfahrens eine Transferfunktion (F) bestimmt, die ermöglicht; von der aktiven Leistung ($P_1$) des Elektromotors (6) zu dem Ausgangsmoment des Servomotors (7) überzugehen.

5. Verfahren nach einem der Ansprüche 1 bis 4, **dadurch gekennzeichnet, dass** man in der ersten Phase des Verfahrens eine Transferfunktion ($F_\alpha$) bestimmt, die ermöglicht, von der aktiven Leistung ($P_1$) des Elektromotors (6) zu dem Ausgangsmoment des Reduziergetriebes überzugehen, das für eine Vielzahl von Positionen der Klappe (4) des Ventils (1) zwischen ihrer geschlossenen Position und ihrer geöffneten Position gleich dem Widerstandsmoment der Klappe (4) des Ventils (1) ist, wobei jede Position aus der Vielzahl von Positionen definiert wird durch einen für die Position der Klappe (4) des Ventils repräsentativen Winkel $\alpha$ oder durch eine bestimmte Zeit während der Verstellung der Klappe (4) des Ventils (1).

6. Kontrollverfahren nach einem der Ansprüche 1 bis 5, wobei der Servomotor (7) eine Schnecke (14) umfasst, angetrieben durch den Elektromotor (6) mittels Zahnrändern (11, 12) und einer Antriebswelle (13), und die Schnecke an ihrem der Antriebswelle (13) entgegengesetzten Ende durch einen Stapel von Tellerfederscheiben (15) abgestützt wird und dabei ein Schneckenrad (20) in die Schnecke (14) eingreifen und eine Ausgangswelle (9) des Servomotors in Drehung versetzen kann, wenn der Tellerfederscheibenstapel (15) sich nicht in einem komprimierten Zustand befindet, und der Drehmomentbegrenzer (18) einen Betätigungsfinger (17) umfasst, der mit einem Teil (16) der Schnecke (14) kooperiert, um für einen Kompressionszustand des Tellerfederscheibenstapels (15) und ein Antriebsmoment der Schnecke (14), eingestellt durch einen Steilzeiger, einen Versorgungsunterbrechungsschalter des Elektromotors (6) auszulösen,
**dadurch gekennzeichnet, dass** man in einem ersten Schritt der ersten Phase verifiziert, dass es eine lineare Relation zwischen der Position des Stellzeigers des Drehmomentbegrenzers (18) und des Ausgangsmoments des Servomotors (7) bei der Auslösung des Drehmomentbegrenzers (18) gibt, indem man in dem Messstand das Ausgangsmoment des Servomotors (7) für verschiedene Positionen des Stellzeigers des Drehmomentbegrenzers (18) misst, mit Hilfe einer Bremse (32), gekuppelt mit der Ausgangswelle (9) des Servomotors (7).

7.  Verfahren nach Anspruch 6, **dadurch gekennzeichnet, dass** man in dem ersten Schritt der ersten Phase des Verfahrens zudem den Proportionalitätskoeffizienten (k) zwischen der Ausgangsgeschwindigkeit des Motors (6) und der Ausgangsgeschwindigkeit des Servomotors (7) bestimmt, indem man in dem Messstand das Ausgangsmoment des Servomotors (7) und simultan die aktive Leistung ($P_1$) des Motors (6) durch Messung der Ströme und Spannungen in den Phasen des Motors (6) misst:

8.  Verfahren nach einem der Ansprüche 6 und 7, **dadurch gekennzeichnet, dass** man in einem zweiten Schritt der ersten Phase in dem Messstand das Ausgangsmoment des mit dem durch den Elektromotor (6) angetriebenen Servomotor (7) gekuppelten Reduziergetriebes misst, indem man eine Bremse (32) des Messstands mit der Ausgangswelle des Reduziergetriebes kuppelt, dann misst und die aktive Leistung des Motors (6) berechnet, für eine Vielzahl von Winkelpositionen des Reduziergetriebes (8) zur Verstellung der Klappe (4) des Ventils (1), und man die durch das Reduziergetriebe (8) verursachten Verluste bestimmt aufgrund einer Kurve, die den theoretischen Wert des Ausgangsmoments des Reduziergetriebes liefert, erhalten aus der aktiven Leistung ($P_1$) des Motors (6) in Abhängigkeit von der Stellung der Klappe (4) des Ventils (1) und einer Kurve, die repräsentativ ist für den realen Wert des durch den Messstand an der Ausgangswelle des Reduziergetriebes gemessenen Moments.

9.  Verfahren nach Anspruch 8, **dadurch gekennzeichnet, dass** das Reduziergetriebe (8) ein nichtlineares Schnecken- bzw. Schraubengetnebe ist.

10. Verfahren nach einem der Ansprüche 6 bis 9, **dadurch gekennzeichnet, dass** man den Betriebsfähigkeitsbereich des Servomotors (7) des Klappenventils (1) bestimmt, indem man bei dem Klappenventil unter realen Betriebsbedingungen des Ventils die aktive Leistung ($P_1$) des Elektromotors (6) durch Messung der Stromstärke und der Spannung in den Phasen des Motors und durch Berechnung bestimmt, man das maximale Ausgangsmoment ($C_{max}$) des Servomotors während eines dem Maximalwert ($P_{1max}$) der aktiven Leistung des Motors (6) entsprechenden Betriebszyklus des Klappenventils (1) bestimmt, mittels einer in der ersten Phase des Verfahrens bestimmten Transferfunktion (F), und man den Bereich

$$ M = \frac{C_{LdC} - C_{max}}{C_{LdC}} \times 100 $$

berechnet aufgrund des während der ersten Phase des Verfahrens bestimmten Auslösungsmoments ($C_{LdC}$) des Servomotors und des durch die Messung und die Berechnung der aktiven Leistung des Motors (6) bestimmten Maximalmoments ($C_{max}$).

11. Verfahren nach einem der Ansprüche 6 bis 10, **dadurch gekennzeichnet, dass** man in einem zweiten Schritt der zweiten Phase des Verfahrens während eines Betriebszyklus des Klappenventils (1) die aktive Leistung ($P_1$) des Elektromotors (6) misst und berechnet, man das Ausgangsmoment des Reduziergetriebes aufgrund der aktiven Leistung ($P_1$) des Elektromotors (6) und insbesondere das maximale Moment ($C_m$) am Ausgang des Reduziergetriebes (8), das dem vorhergehend bestimmten maximalen Moment ($C_{max}$) am Ausgang des Servomotors entspricht, berechnet und man daraus den Betriebsbereitschaftsbereich für die Position ($\alpha_m$) einer Klappe (4) des Ventils (1) ableitet, der am Ausgang des Reduziergetriebes das maximale Moment ($C_{max}$) liefert, indem man den Abstand des Moments ($C_m$) am Ausgang des Reduziergetriebes in Bezug auf eine Kurve (40) misst, die das Ausgangsmoment des Reduziergetriebes (8) liefert, das dem Auslösungsmoment ($C_{LdC}$) des Servomotors entspricht.

**Claims**

1.  Method of checking the range of operability of a butterfly valve (1) comprising a flap (4), mounted in a valve body (3) so that it can rotate about an axis (5), and control means (6, 7, 8) for moving the flap (4) between a position of closure and a position of complete opening of the valve, comprising an electric motor (6), a servomotor (7) and a reduction gear (8) arranged in series to provide rotary movement of the flap (4), the servomotor (7) being associated with a torque limiter (18) regulatable to bring about stoppage of the motor (6) at a fixed output torque of the servomotor (7) referred to as the disengagement torque of the torque limiter (18), the checking method being aimed at verifying that the margin between the driving torque of the flap (4) and the disengagement torque of the torque limiter (18) is at least equal to a predetermined threshold value for any position of the flap (4) or at any instant during operation of the valve, **characterised in that**:

    - in a first, initial phase, the flap (4) is isolated from the movement control means (6, 7, 8) and there are measured, on a measuring bench, at least one of the disengagement torque ($C_{LdC}$) of the servomotor (7) and the output torque of the reduction gear (8) on disengagement of the servomotor (7), in a plurality of angular positions of movement of the flap (4), the control means (6, 7, 8) being driven by the electric motor (6), and, simultaneously, the effective power of the motor (6), for a plurality of regulation values of the torque limiter (18), and there are deduced therefrom transfer functions for deriving the driving torque of the flap (4) provided by at least one of the servomotor (7) and the reduction gear (8) from the effective power of the motor,

- in a second phase, the flap (4) of the valve (1) is moved between its positions of closure and opening by means of the control means (6, 7, 8) driven by the electric motor (6), the valve being in a state of normal operation and the torque limiter under predetermined conditions of regulation, the effective power of the motor (6) is measured and calculated and there is deduced therefrom by calculation, starting from the transfer functions, values of at least one of the torque at the output of the servomotor and the torque at the output of the reduction gear, in the course of movement of the flap (4), and

- the values of the torque obtained by measurement and calculation are compared with values corresponding to at least one of the disengagement torque of the servomotor (7) and the output torque of the reduction gear (8), on disengagement of the servomotor (7), which were obtained in the first phase.

2. Method according to claim 1, **characterised in that** the motor (6) is a three-phase motor, and **in that** the effective power of the motor (6) is determined starting from currents (i1, i2, i3) and voltages (u1, u2, u3) at the three phases of the motor, measured during operation of the motor (6).

3. Method according to any one of claims 1 and 2, **characterised in that**, in addition, closure and opening of the valve are determined by means of signals from limit-of-travel detectors associated with the butterfly valve (1).

4. Method according to any one of claims 1 to 3, **characterised in that**, in the first phase of the method, there is determined a transfer function (F) which makes it possible to derive the torque at the output of the servomotor (7) from the effective power ($P_1$) of the electric motor (6).

5. Method according to any one of claims 1 to 4, **characterised in that** there is determined, during the first phase of the method, a transfer function ($F\alpha$) which makes it possible to derive, from the effective power ($P_1$) of the electric motor (6), the torque at the output of the reduction gear which is equal to the load moment on the flap (4) of the valve (1), for a plurality of positions of the flap (4) of the valve (1) between its positions of closure and of opening, each position of the plurality of positions being defined by an angle $\alpha$ which is representative of the position of the flap (4) of the valve or by a predetermined time during movement of the flap (4) of the valve (1).

6. Method of checking according to any one of claims 1 to 5, the servomotor (7) comprising an endless screw (14) driven in rotation by the electric motor (6) by way of pinions (11,12) and a drive shaft (13), the endless screw abutting, at its end remote from the drive shaft (13), a stack of Belleville washers (15), and a toothed wheel (20) capable of engaging with the screw (14) and driving an output shaft (9) of the servomotor in rotation, when the stack of Belleville washers (15) is not in a compressed state, the torque limiter (18) comprising an actuation finger (17) cooperating with a part (16) of the endless screw (14) for triggering a contactor for cutting the supply of the electric motor (6), for a state of compression of the stack of Belleville washers (15) and a drive torque of the screw (14) which are regulated by an index, **characterised in that**, in a first step of the first phase, it is verified that there exists a linear relationship between the position of the regulation index of the torque limiter (18) and the output torque of the servomotor (7) on disengagement of the torque limiter (18) by measuring the output torque of the servomotor (7) on the measuring bench by means of a brake (32) coupled to the output shaft (9) of the servomotor (7), for different positions of the index of the torque limiter (18).

7. Method according to claim 6, **characterised in that**, in the first step of the first phase of the method, there is determined, in addition, the coefficient (k) of proportionality between the output speed of the motor (6) and the output speed of the servomotor (7) by measuring the output torque of the servomotor (7) on the measuring bench and, simultaneously, the effective power ($P_1$) of the motor (6), by measurement of the currents and voltages at the phases of the motor (6).

8. Method according to any one of claims 6 and 7, **characterised in that**, in a second step of the first phase of the method, there is measured the output torque of the reduction gear coupled to the servomotor (7) driven by the electric motor (6), on the measuring bench, by coupling a brake (32) of the measuring bench to the output shaft of the reduction gear, the effective power of the motor (6) is measured and calculated for a plurality of angular positions of the reduction gear (8) for movement of the flap (4) of the valve (1), and the losses due to the reduction gear (8) are determined starting from a curve giving the theoretical value of the output torque of the reduction gear obtained starting from the effective power ($P_1$) of the motor (6) as a function of the position of the flap (4) of the valve (1) and a curve that is representative of the real value of the torque measured by the measuring bench on the output shaft of the reduction gear.

9. Method according to claim 8, **characterised in that** the reduction gear (8) is a non-linear screw-and-nut reduction gear.

10. Method according to any one of claims 6 to 9, **characterised in that**, in a first step of the second phase of the checking method, there is determined the range of operability of the servomotor (7) of the butterfly valve (1) by determining, on the butterfly valve under real conditions of use of the valve, the effective power ($P_1$) of the electric motor (6) by measurement of current and voltage at the phases of the motor and by calculation, there is determined the maximum output torque ($C_{max}$) of the servomotor during a cycle of operation of the butterfly valve (1) corresponding to the maximum value ($P_{1max}$) of the effective power of the motor (6), by means of a transfer function (F) determined in the first phase of the method, and there is calculated the margin

$$M = \frac{C_{LdC} - C_{max}}{C_{LdC}} \times 100$$

starting from the disengagement torque ($C_{LdC}$) of the servomotor determined during the first phase of the method and from the maximum torque ($C_{max}$) determined by measurement and calculation of the effective power of the motor (6).

11. Method according to any one of claims 6 to 10, **characterised in that**, in a second step of the second phase of the method, there is measured and calculated, during a cycle of operation of the butterfly valve (1), the effective power ($P_1$) of the electric motor (6), there is calculated the output torque of the reduction gear starting from the effective power ($P_1$) of the electric motor (6) and in particular the maximum torque ($C_m$) at the output of the reduction gear (8) corresponding to the previously determined maximum torque ($C_{max}$) at the output of the servomotor and there is deduced therefrom the range of operability for the position ($\alpha_m$) of a flap (4) of the valve (1) giving the maximum torque ($C_m$) at the output of the reduction gear, by measuring the difference in the torque (Cm) at the output of the reduction gear with respect to a curve (40) giving the output torque of the reduction gear (8) corresponding to the disengagement torque ($C_{Ldc}$) of the servomotor (7).

FIG.1

FIG.2

EP 1 102 052 B1

FIG.3

FIG.4

**FIG.5**

FIG.6

COUPLE DE SORTIE DU
REDUCTEUR NON LINEAIRE

38
39
42

0          50          90

ANGLE $\alpha$

FIG.7

$+\infty$

COUPLE

40
41
41a
41b

$\alpha=0°$          ANGLE          $\alpha=90°$

FIG.8